# EUROPÄISCHE PATENTSCHRIFT

(11) **EP 3 662 561 B1**
(45) Veröffentlichungstag und Bekanntmachung des Hinweises auf die Patenterteilung: **05.05.2021**
(21) Anmeldenummer: 18769026.8
(22) Anmeldetag: 03.08.2018
(51) Int. Cl.: H02J 7/00, G04C 10/00, G04G 19/00, G06F 1/16

(54) **ADAPTER FÜR EINE LADESTATION FÜR TELEKOMMUNIKATIONSENDGERÄTE**
ADAPTER FOR A CHARGING STATION FOR TELECOMMUNICATION TERMINALS
ADAPTATEUR POUR UNE STATION DE CHARGE DE TERMINAUX DE TÉLÉCOMMUNICATION

(30) Priorität: 04.08.2017 DE 102017117730; 29.09.2017 DE 102017122691
(43) Veröffentlichungstag der Anmeldung: 10.06.2020
(73) Patentinhaber: Dittrich, Klemens, 42109 Wuppertal (DE)
(72) Erfinder: Dittrich, Klemens, 42109 Wuppertal (DE)
(74) Vertreter: Schulte & Schulte
(86) Internationale Anmeldenummer: PCT/DE2018/100685
(87) Internationale Veröffentlichungsnummer: WO 2019/024962

(56) Entgegenhaltungen:
- DE-U1-202013 008 702
- DE-U1-202015 103 714
- US-A1- 2011 025 263
- US-A1- 2013 113 420

## Beschreibung

Die Erfindung betrifft eine Ladestation für Telekommunikationsgeräte und andere elektronische Kleingeräte wie Uhren, mit einer mehrere parallel zueinander angeordnete Stege aufweisenden Plattform, unterhalb welcher Versorgungskabel und Steckverbindungen zum Anschluss an das zugehörige Ladegerät verlegbar sind, wobei zur Verbindung der auf der Plattform positionierten Telekommunikations- oder Kleingeräte mit den Versorgungskabeln oder Steckverbindungen unterhalb der Plattform mindestens ein Adapter dient.

Telekommunikationsendgeräte wie Mobiltelefone oder Tablet-Computer, auch Kleingeräte wie elektronische Uhren, erfreuen sich zunehmender Beliebtheit, sodass in vielen Haushalten oder Büros gleich mehrere dieser Geräte zu finden sind. Dabei kennt jeder Benutzer das Problem, dass man seine Geräte häufig verlegt oder keinen geeigneten Platz zum Aufladen der Akkus der Geräte findet, häufig auch weil ein Mitbewohner oder Mitarbeiter gerade sein Gerät auflädt. Dies gilt auch für den Fall, dass man sich nicht Zuhause oder im Büro, sondern an einem Ort befindet, mit dem man nicht gut vertraut ist, etwa in einem Hotel. Bereits bekannt sind Stationen zur Aufnahme auch mehrerer solcher tragbarer Geräte, etwa aus der WO 2017/008768 oder der WO 2014/198262. Solche Geräte sind in ihrer Handhabbarkeit allerdings eingeschränkt, zumal Adapter notwendig sind, um die Verbindung zwischen dem aufzuladenden Gerät und der Versorgung herzustellen.

Der vorliegenden Erfindung stellt sich die Aufgabe, eine Ladestation für Telekommunikationsgeräte und elektronische Kleingeräte wie Uhren zu schaffen, die zur Aufnahme mehrerer, auch unterschiedlicher Endgeräte und für deren Ein- und Ausbau sowie sicheren Anschluss an die Stromversorgung besonders geeignet ist.

Diese Aufgabe wird erfindungsgemäß durch die Gegenstände der unabhängigen Ansprüche gelöst. Vorteilhafte Ausführungsformen sind Gegenstand der abhängigen Ansprüche.

Eine bevorzugte Ausführungsform der Erfindung sieht vor, dass ein Adapter mit seiner Längsachse quer zu den Stegen einer Plattform einsetzbar und fixierbar ist und eine Aufnahme für ein Telekommunikations- oder Kleingerät und einen zwischen zwei Stegen der Plattform einzusetzenden und mit der Aufnahme über einen in Art eines Auslegers ausgebildeten Verbindungsarm verbundenen Fixierklotz aufweist und wobei ein korrespondierend zu der Aufnahme, und dem Fixierklotz ausgebildeter Deckel vorgesehen ist, welcher über eine Verrastung mit der Aufnahme und dem Verbindungsarm verbindbar ausgebildet ist.

Auf bzw. in der Plattform können also eine Vielzahl von Telekommunikations- und Kleingeräten angeordnet werden, die alle mit einem Ladegerät, etwa einem USB-Ladegerät verbunden sind. Die Verbindung stellt dabei solch ein Adapter dar, der quer zu den Stegen auf diesen angeordnet wird und eine Aufnahme für ein Telekommunikations- oder Kleingerät aufweist. Zur Fixierung des Adapters dient ein zwischen zwei benachbarten Stegen einsetzbarer Fixierklotz, der wiederum mit der Aufnahme über einen Verbindungsarm verbunden ist. Damit ist ein besonders flexibel einsetzbarer und leicht handhabbarer, gut zu montierender und wieder zu demontierender Adapter geschaffen, der sich zudem durch hohe Kompatibilität ausweist.

Eine weitere vorteilhafte Ausführungsform der Erfindung sieht dabei vor, dass Aufnahme, Verbindungsarm und/oder Fixierklotz als separate, miteinander zu verbindende Bauteile ausgebildet sind, sodass sich Kabel zwischen der Aufnahme und dem Klotz, anders formuliert, zwischen Ober- und Unterseite der Plattform sehr gut installieren und auch wieder demontieren lassen. Aufnahme und Verbindungsarm können zweckmäßigerweise einteilig ausgebildet sein und werden dann als Baugruppe mit dem Fixierklotz verbunden. Das jeweilige Gerät kann ohne besonderen Aufwand und unabhängig davon, wieviel andere Geräte bereits installiert sind, eingesetzt werden.

Zusätzlich werden diese Funktionen erleichtert, indem der Verbindungsarm und der Fixierklotz über eine Rastverbindung miteinander verbunden sind. Vorzugsweise ist diese Rastverbindung so ausgebildet, dass der Fixierklotz seitlich in den Verbindungsarm, also quer zu dessen Längsachse, eingeschoben wird - oder umgekehrt.

Als zweckmäßig kann es sich erweisen, das Telekommunikations- oder Kleingerät, etwa eine elektronische Uhr, geneigt in die Plattform bzw. den Adapter einzusetzen, um beispielsweise diese Geräte während des Ladevorgangs besser bedienen zu können. In diesem Zusammenhang reicht es dann aus, wenn der Fixierklotz an seiner Oberseite eine Neigung aufweist, die sich dann auf den Verbindungsarm und insbesondere die Aufnahme überträgt.

Die leichte Installation solch eines Adapters wurde bereits angesprochen. Damit das Kabel auch in geeigneter Form "verschwindet", empfiehlt es sich, wenn die Aufnahme, der Verbindungsarm und/oder der Fixierklotz Ausnehmungen zur Durchführung eines Kabels aufweisen und zwar bevorzugt an ihren Innenseiten.

Dass die Aufnahme als Befestigung für ein Fitness-Armband ausgebildet ist, stellt eine bevorzugte Applikation dar. Solch ein elektronisches Fitness-Armband wird um eine entsprechende Halterung gelegt und dann gleichzeitig aufgeladen, wobei Taschen zur Aufnahme der Halterung dienen können. Dazu weist die Aufnahme zwei durch einen Längsschlitz unterbrochene Taschen zur Aufnahme des Fitness-Armbandes auf.

Wenn der Fixierklotz unterhalb der Aufnahme positioniert ist, entsteht eine besonders große Aufnahme für ein Telekommunikations- oder ein elektronisches Kleingerät. Dabei nimmt der Fixierklotz seine Position zwischen den Stegen ein, gleichzeitig ist jedoch die Aufnahme naturgemäß so dimensioniert, dass sie bzw. der Adapter zwischen den Stegen gehalten ist.

Anders formuliert, Länge und/oder Breite der Aufnahme sind größer dimensioniert als der lichte Abstand zwischen zwei Stegen der Plattform, sodass der Fixierklotz zwischen den beiden Stegen verschwindet, gleichzeitig ist der Adapter aber dank seiner ausreichend großen Dimensionierung gehalten und dank des Klotzes auch gegen Verdrehung gesichert.

Eine zusätzliche Sicherung gegen Verschiebung der Adapter ist realisiert, wenn der Fixierklotz über mindestens ein Befestigungsmittel mit dem Gehäuseboden der Ladestation verbunden ist. Gedacht ist dabei etwa an eine Verschraubung. Aufgrund der Kompaktheit des Fixierklotzes sind hier stabile Verbindungen leicht realisierbar.

Eine weitere vorteilhafte Ausführungsform der Erfindung sieht vor, dass der Abstand zwischen zwei benachbarten Stegen zur Aufnahme zweier hintereinander angeordneter Telekommunikations- oder Kleingeräte bemessen ist. Dieser Vorschlag steht in Verbindung mit einer Technologie, bei der es zur berührungslosen Aufladung von Akkus kommt. Hier bietet die erfindungsgemäße Ladestation eine Lösung, indem zwei Mobiltelefone beispielsweise in einem entsprechend dimensionierten Freiraum zwischen zwei Stegen hintereinander eingesetzt werden können.

Um handelsübliche Geräte in diesem Sinne in dem Freiraum zwischen den Stegen unterbringen zu können, ist es sinnvoll, wenn die Stege einen lichten Abstand von 18 mm aufweisen.

Eine weitere vorteilhafte Ausführungsform der Erfindung sieht vor, dass zwischen der Plattform und dem Gehäuse, in das die Plattform einzusetzen ist, eine Magnetverbindung vorgesehen ist. Die Plattform dient dabei zur Aufnahme der Telekommunikations- und Kleingeräte und zur Herstellung der Verbindung mit Ladegeräten unterhalb der Plattform, die zugleich den oberen Abschluss des Gehäuses bildet. Damit die Verbindung zwischen dem Gehäuse und der Plattform zusätzlich stabilisiert ist, ist daran gedacht, dass zwischen der Plattform und dem Gehäuse, in das die Plattform einzusetzen ist, eine Magnetverbindung vorgesehen ist.

Konkret verhält es sich so, dass das Gehäuse an seiner Innenseite einen Kragen zur Auflage der Plattform aufweist und dass zwischen dem Kragen und der Oberkante des Gehäuses mindestens ein Magnet vorgesehen ist. Damit schließt die Plattform einerseits bündig mit der Oberkante des Gehäuses ab und andererseits ist zusätzlicher Halt dank der Magnetleisten gegeben.

Besonders zweckmäßig sind diese Magnetleisten untergebracht, indem die Plattform an der Außenseite ihrer äußeren Längsstege mindestens jeweils einen Magneten aufweist. Beim Einsetzen der Plattform in das Gehäuse findet sich die Magnetverbindung damit quasi von selbst.

Die Erfindung zeichnet sich insbesondere dadurch aus, dass eine Ladestation und ein Adapter für eine Ladestation für Telekommunikations- und elektronische Kleingeräte geschaffen sind, die sich durch hohe Funktionalität, leichte Montage und Demontage und einfache und sichere Handhabung auszeichnen. Dazu ist ein aus einer Aufnahme, einem Befestigungsklotz und einem Verbindungsarm in Art eines Auslegers zur Verbindung von Aufnahme und Befestigungsklotz bestehender Adapter vorgesehen, der quer zu den Stegen zu positionieren ist und der sich durch hohe Kompatibilität auszeichnet, indem insbesondere die Aufnahme dem jeweiligen Telekommunikations- oder elektronischen Kleingerät anzupassen ist. Kabel zur Verbindung der Ober- und Unterseite der Plattform bzw. des Gerätes mit der Ladestation werden auf effektive Weise so im Bereich von Aufnahme-, Verbindungsarm und/oder Fixierklotz untergebracht und integriert, dass sie nicht nach außen in Erscheinung treten.

Weitere Einzelheiten und Vorteile des Erfindungsgegenstandes ergeben sich aus der nachfolgenden Beschreibung und der zugehörigen Zeichnungen.
- Figur 1: eine Ladestation in Explosionsdarstellung,
- Figur 2: eine Ladestation von oben,
- Figur 3: eine Ladestation mit eingesetzten Telekommunikationsgeräten,
- Figur 4: Ausgleichselemente,
- Figur 5: das Gehäuse einer Ladestation mit Brücke,
- Figur 6: eine Brücke,
- Figur 7: einen Adapter in Seitenansicht,
- Figur 8: einen Adapter in perspektivischer Ansicht,
- Figur 9: einen Adapter in Explosionsdarstellung,
- Figur 10: einen anderen Adapter in Seitenansicht,
- Figur 11: diesen Adapter in Draufsicht,
- Figur 12: diesen Adapter in Explosionsdarstellung,
- Figur 13: eine weitere Variante eines Adapters in Seitenansicht,
- Figur 14: dieser Adapter in perspektivischer Ansicht,
- Figur 15: dieser Adapter in Explosionsdarstellung,
- Figur 16: eine weitere Adaptervariante in Draufsicht,
- Figur 17: dieser Adapter in Explosionsdarstellung,
- Figur 18: einen Deckel,
- Figur 19: einen Adapter ohne Deckel,
- Figur 20: einen Adapter für ein Fitness-Armband,

- Figur 21: eine ergänzende Darstellung zu Figur 1 und
- Figur 22: eine Variante zu Figur 20.

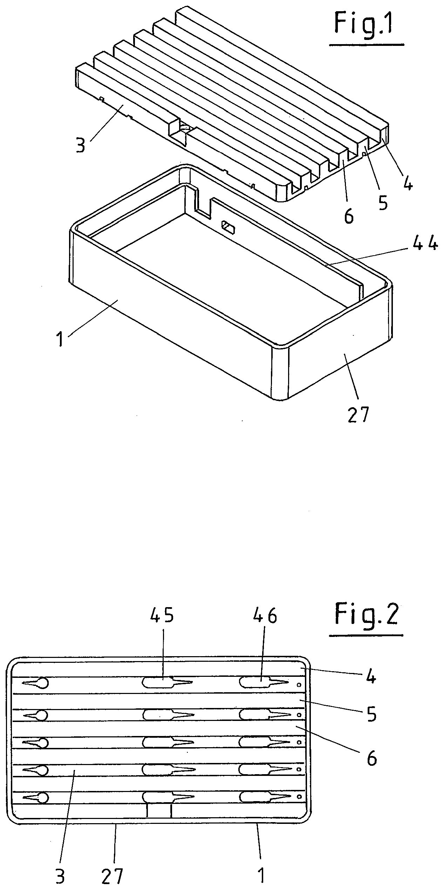

In Figur 1 ist eine Ladestation 1 gezeigt, die sich aus einem Gehäuse 27 und einer Plattform 3 zusammensetzt. Dazu weist das Gehäuse 27 einen umlaufenden Kragen 44 auf, der ein Einsetzen der Plattform 2 in das Gehäuse 27 ermöglicht. Die Plattform 3 umfasst mehrere Längsstege, von denen drei beispielhaft mit den Bezugszeichen 4, 5 und 6 versehen sind.

Von oben zeigt Figur 2 eine Ladestation 1 mit den Durchführungen 45, 46 etc. für die Kabel. Der Abstand zwischen den Längsstegen 4 und 5 ist dabei größer bemessen als der Abstand zwischen den übrigen Stegen zwecks Unterbringung mehrerer Telekommunikations- oder Kleingeräte hintereinander unter gemeinsamer Ausnutzung des betreffenden Anschlusses.

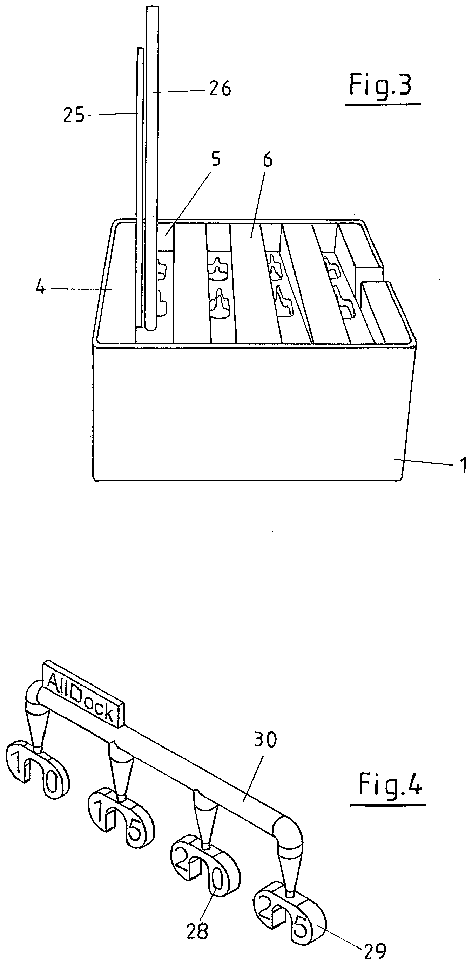

Illustriert ist das in Figur 3 mit den beiden eingesetzten Telekommunikationsgeräten 25, 26 in Form von Mobiltelefonen in dem Freiraum zwischen den beiden Längsstegen 4 und 5. Die beiden Telekommunikationsgeräte 25 und 26 teilen sich dabei gewissermaßen den Anschluss an die Aufladestation.

Figur 4 zeigt Ausgleichselemente 28, 29 etc. an einem Arm 30 vor der Installation. Ein solches Ausgleichselement kommt zum Einsatz zur Überbrückung eines Steckeranschlusses. Häufig kommt es dazu, dass solche Stecker nicht den Idealsitz einnehmen, sondern geringfügig verrutschen, vor allem nach innen, wozu dann ein solches Ausgleichselement 28, 29 zum Einsatz kommt.

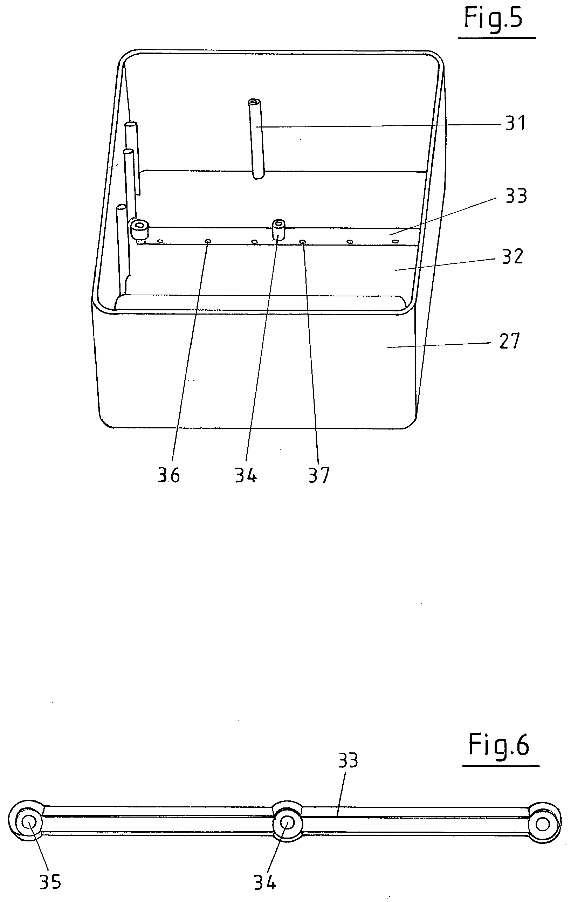

Ein Gehäuse 27 zeigt Figur 5 mit zwei zusätzlichen Installationen. Eine wird abgebildet durch das Röhrchen 31 mit einer Aufnahme für ein hier nicht dargestelltes Befestigungsmittel beim Zusammenbau der Ladestation, gebildet aus Plattform und Gehäuse 27. Das andere Augenmerk gilt der Brücke 33 auf dem Boden 32 des Gehäuses 27. Die Brücke 33 weist mehrere Löcher auf, von denen zwei beispielhaft mit 36 und 37 versehen sind und die zur Durchführung bzw. Fixierung der Kabel und damit auch dazu dienen, dass eine gewisse Sortierung der Kabel im Inneren des Gehäuses 27 stattfindet. Aufnahmen 34, 35 dienen für hier nicht dargestellte Befestigungsmittel.

Solch eine Brücke 33 zeigt dann Figur 6 in Draufsicht mit den beispielhaften Aufnahmen 34 und 35 für die hier nicht dargestellten Befestigungsmittel.

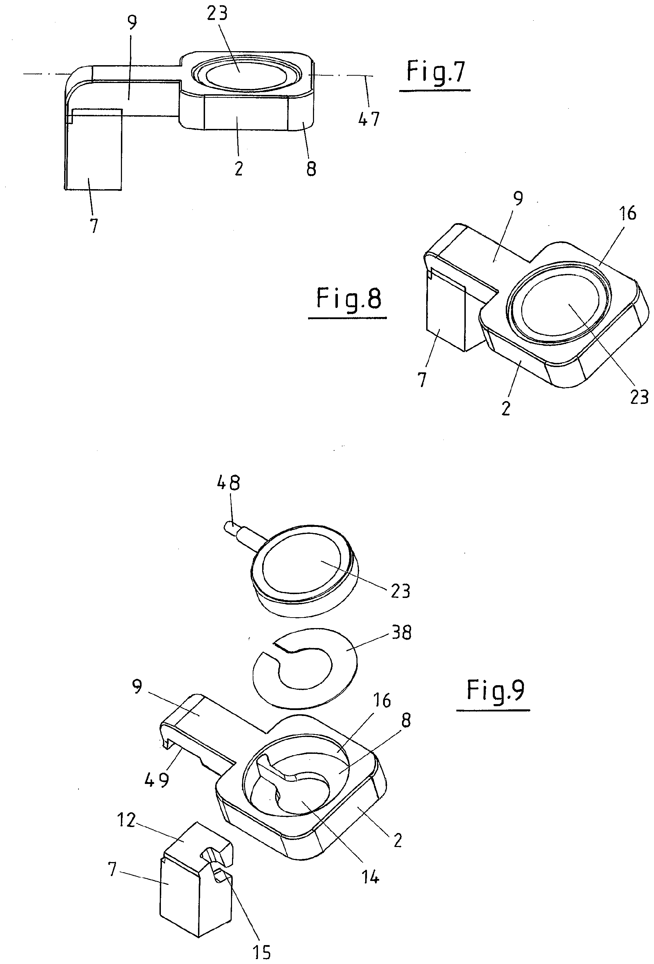

Einen Adapter 2 der nicht von der beanspruchten Erfindung erfasst wird, zeigt Figur 7 mit den wesentlichen Bauteilen Aufnahme 8, hier für eine elektronische Uhr 23, Fixierklotz 7 und Verbindungsarm 9, sodass ein solcher Adapter 2 mit seiner Längsachse 47 quer zu den Stegen der Plattform eingesetzt und fixiert werden kann.

Dies verdeutlicht Figur 8 mit einer geneigten Baugruppe aus Aufnahme 8 und Verbindungsarm 9.

Bei Figur 9 handelt es sich dann um eine Explosionsdarstellung für solch einen Adapter 2. Erkennbar ist, dass der Klotz 7 an seiner Oberseite 12 eine Neigung aufweist, welche der Klotz 7 dann gewissermaßen für den Verbindungsarm und im Speziellen für die Aufnahme 8 vorgibt. Mit 15 ist eine Ausnehmung für ein Kabel klotzseitig bezeichnet. Dazu zeigt Figur 9 das aus Aufnahme 8 und Verbindungsarm 9 bestehende Bauteil. Gut zu erkennen sind die Ausnehmungen 14 für die Kabel in der Kopfplatte 16 bzw. der Ausnehmung 8. Mit 38 ist ein Ausgleichsring bezeichnet und mit 23 schließlich die elektronische Uhr mit ihrem Anschluss 48. Gut vorstellbar ist anhand von Figur 9 auch, wie die Rastverbindung zwischen dem Fixierklotz 7 und dem Verbindungsarm 9 hergestellt werden kann, indem beide Bauteile an ihrer Oberseite 12 bzw. ihrer Unterseite 49 miteinander korrespondieren.

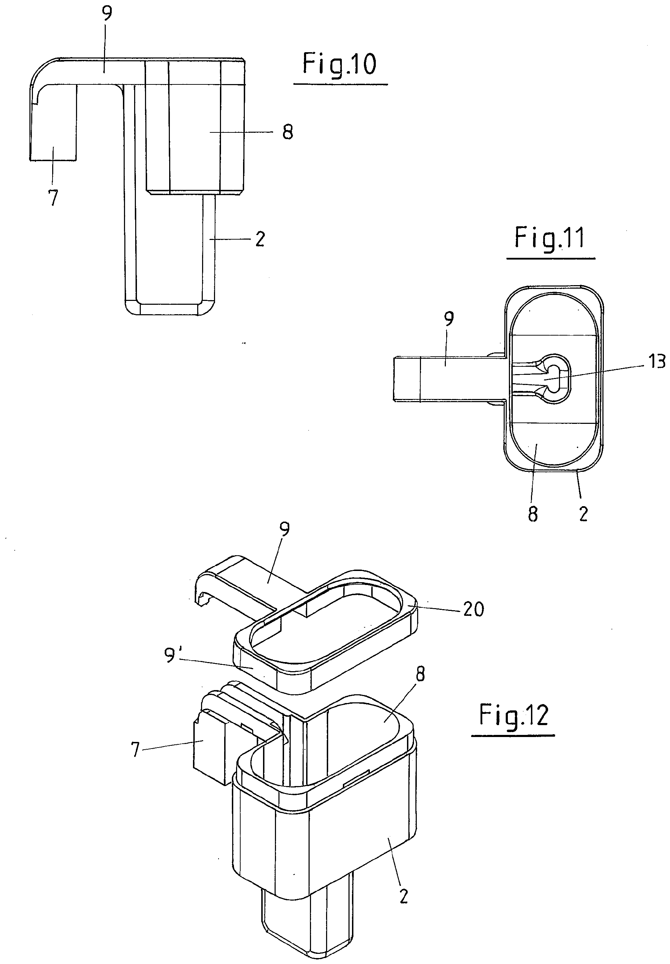

Eine Variante für einen Adapter 2 zeigt Figur 10, der wiederum maßgeblich aus den Bauteilen Fixierklotz 7, Verbindungsarm 9 und Aufnahme 8 besteht, etwa um Bluetooth-Kopfhörer in der Aufnahme 8 zwecks Aufladung unterbringen zu können.

Erkennbar ist dies in Figur 11 mit der Ausnehmung 13 in der Aufnahme 8 zur Aufnahme von Versorgungskabeln.

Dazu veranschaulicht Figur 12, dass eine Art Deckel 20 auf den Adapter 2 im Bereich der Aufnahme 8 aufgesetzt wird, die beiden Teile 9, 9' des Verbindungsarms miteinander korrespondieren.

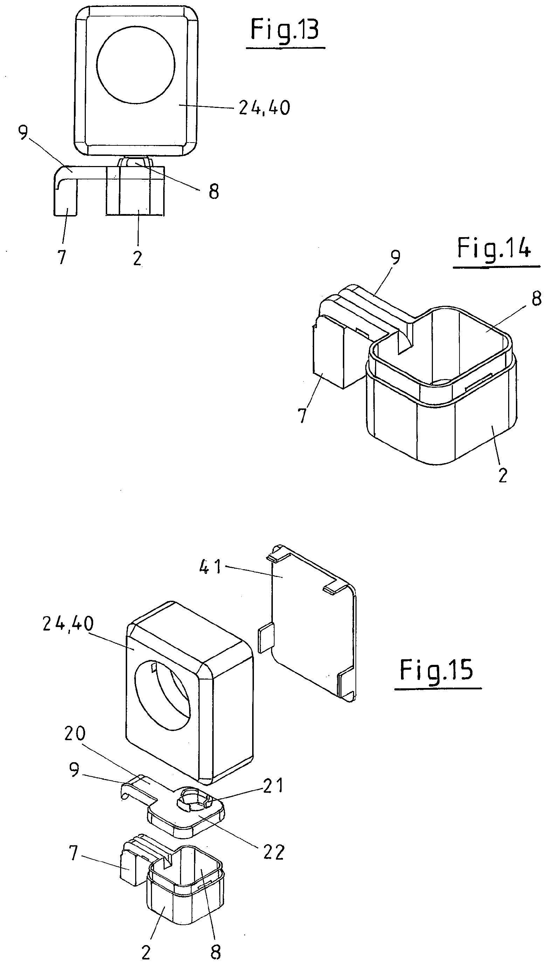

Um die Anwendung im Zusammenhang mit einer Kamera geht es in den Darstellungen gemäß Figur 13 bis 15. Zunächst zeigt Figur 13 solch eine Kamera 40 als Beispiel für ein Kleingerät 24, mit der Aufnahme 8 und so mit dem Adapter 2 verbunden in Form eines in Figur 13 angedeuteten Gelenkes.

Figur 14 zeigt wiederum den Adapter 2, hier ohne einen Deckel, worauf unter Figur 15 noch einzugehen sein wird.

Diese Figur 15 zeigt nämlich den Deckel 20 für den Adapter 2. Dieser Deckel 20 verfügt an seiner Oberseite 22 über Rastmittel 21, mit denen der Adapter 2 und das Kleingerät 24 in Form der Kamera dreh- und schwenkbar miteinander verbunden werden können. Gleichzeitig überbrückt der Adapter 2 naturgemäß den Abstand zwischen Kamera und Ladestation. Mit 41 ist noch der Deckel für das Gehäuse der Kamera 40 bezeichnet.

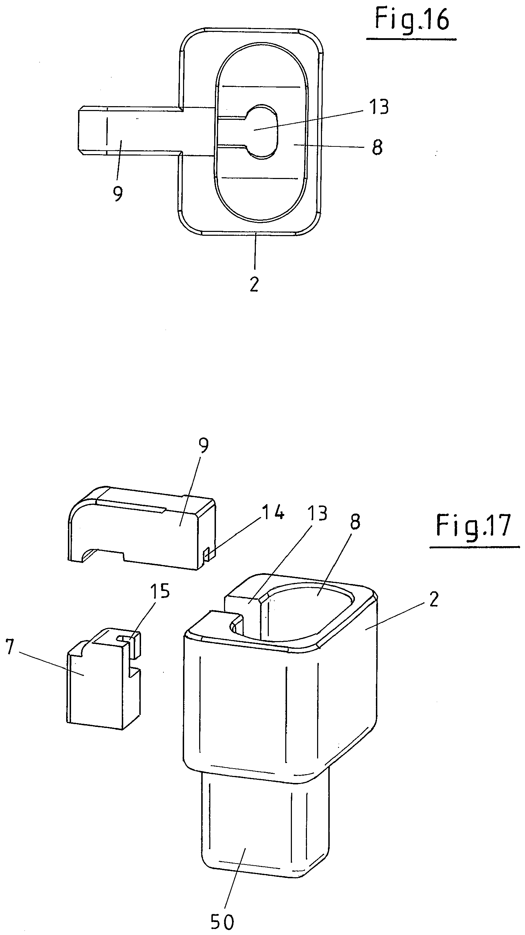

Eine weitere Variante die nicht von der beanspruchten Erfindung erfasst wird, zeigen dann Figur 16 und Figur 17. Von oben erkennbar ist die Aufnahme 8 in Figur 16 mit der Ausnehmung 13 zur Führung des Kabels in Richtung bzw. unterhalb des Verbindungsarms 9.

Figur 17 veranschaulicht einen Adapter 2, bei dem Länge und Breite der Aufnahme 8 größer dimensioniert sind als der lichte Abstand zwischen zwei Stegen, was zum Ausdruck kommt durch die kleinere Dimensionierung des Klotzes 50 in Relation zu der Aufnahme 8.

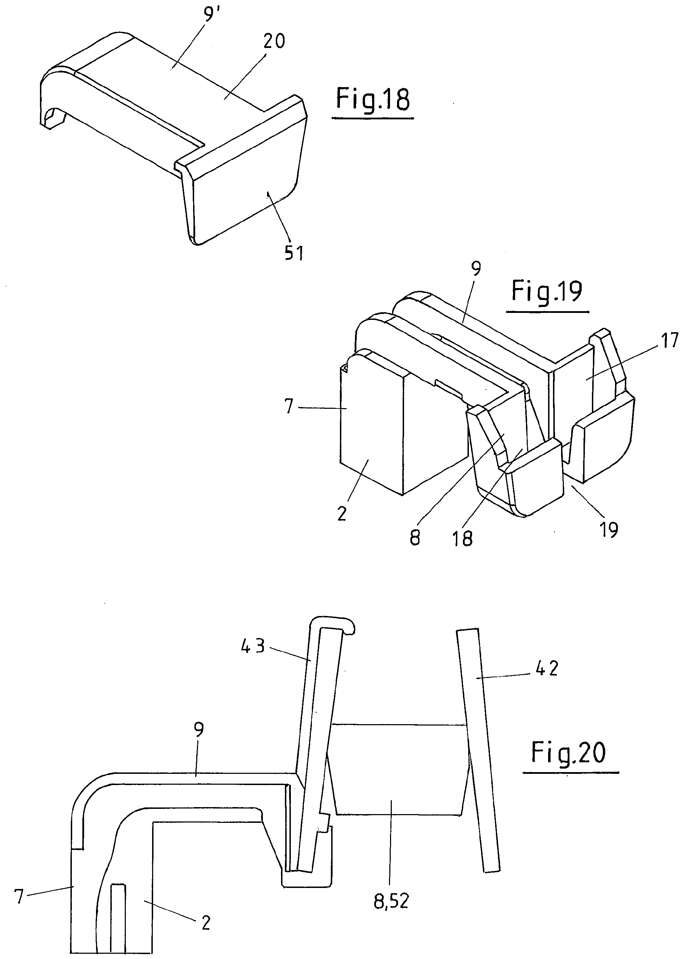

Figur 18 zeigt einen Deckel 20 mit dem Verbindungsarm 9' und einer Fixierplatte 51.

Figur 19 zeigt dann den Adapter 2 mit Fixierklotz 7, Aufnahme 8 und Verbindungsarm 9, auf den der in Figur 18 gezeigte Deckel aufgesetzt werden kann. Als Aufnahme 8 dienen hier zwei Taschen 17, 18, die durch einen Längsschlitz 19 voneinander getrennt sind und deren Funktion in Figur 20 näher erläutert wird.

So zeigt Figur 20 einen Adapter 2 mit zwei Armen 42, 43 und einem Mittelstück 52 als Aufnahme 8 für ein hier nicht dargestelltes Fitness-Armband, das dann während der Unterbringung bzw. Aufladung oben auf dem Mittelstück 52 aufliegt.

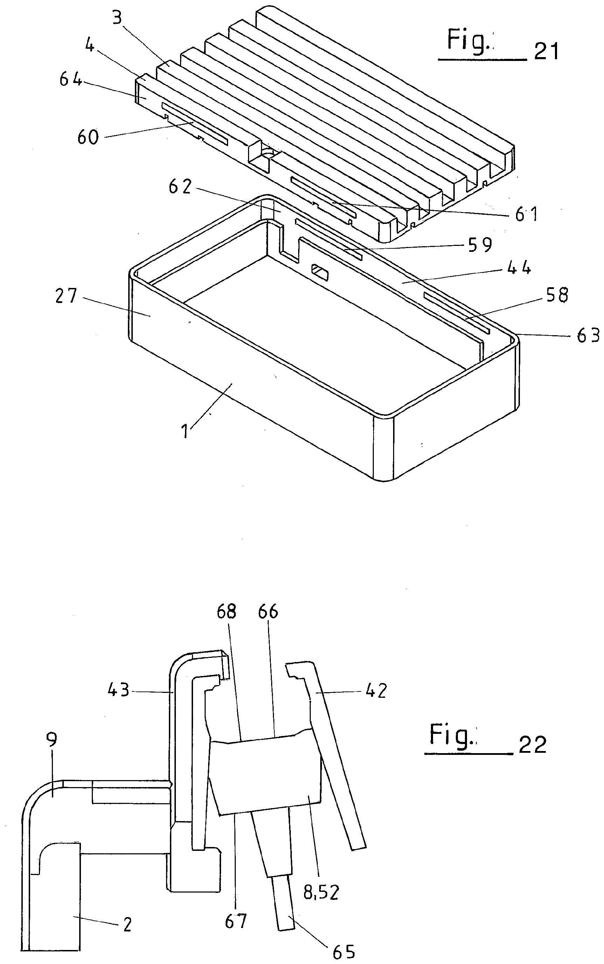

Figur 21 zeigt eine Ladestation 1 mit Gehäuse 27 und der in dieses Gehäuse 27 eingesetzten Plattform 3. Das Gehäuse 27 umfasst einen umlaufenden Kragen 44, der in seiner Positionierung so abgestimmt ist, dass die Plattform 3 mit den Stegen 4 etc. mit der Oberkante 63 des Gehäuses 27 bündig abschließt. Zwischen dem Kragen 44 und der Oberkante 63 des Gehäuses 27 befinden sich an dessen Innenseite 62 zwei Magnetleisten 58, 59. Diese Magnetleisten 58, 59 an gegenüber liegenden Innenseiten des Gehäuses 27 korrespondieren mit Magnetleisten 60, 61 an gegenüber liegenden Außenseiten der Plattform 3, genauer gesagt mit den Magnetleisten 60, 61 an der Außenseite 64 des äußeren Längsstegs 4 der Plattform 3 (nach einer Drehung der Plattform 3 um 180°). Dabei erweist sich eine Positionierung von Magnetleisten an gegenüberliegenden Flanken von Gehäuse 27 und Plattform 3 als besonders vorteilhaft.

Schließlich zeigt Figur 22 einen Adapter 2 zur Aufnahme eines Armbandes, insbesondere eines Fitnessarmbandes mit Anzeigen zur Gesundheit und Fitness sowie zur Aufzeichnung von Aktivitäten, Ruhephasen etc. oder eines Kopfhörers etc. Dazu umfasst der Adapter 2 neben dem Auslegerarm 9 über zwei flügelartige Arme 42 und 43, die sich gegenüber liegen und gemeinsam zur Aufnahme des hier nicht dargestellten Gerätes dienen. Mit 52 bzw. 8 ist das Mittelstück bzw. die Aufnahme bezeichnet, die ihrerseits einen Anschluss 65 an der Unterseite 67 der Aufnahme aufweist. Dabei handelt es sich um die Verbindung zum Ladegerät, während an der Oberseite 68 der Aufnahme 8 die Anschlüsse mit dem Bezugszeichen 66 versehen sind. Über diese wird die Verbindung zu dem Gerät hergestellt. Gut zu erkennen ist mithin in Figur 22 die Effizienz der Aufnahme wie die Sicherung des Gerätes über die Arme 42, 43 und die Aufnahme 8.

## Patentansprüche

1. Ladestation (1) für Telekommunikationsgeräte und andere elektronische Kleingeräte wie Uhren, mit einer mehrere parallel zueinander angeordnete Stege (4 - 6) aufweisenden Plattform (3), unterhalb welcher Versorgungskabel und Steckverbindungen zum Anschluss an das zugehörige Ladegerät verlegbar sind, wobei zur Verbindung der auf der Plattform (3) positionierten Telekommunikations- oder Kleingeräte mit den Versorgungskabeln oder Steckverbindungen unterhalb der Plattform (3) mindestens ein Adapter (2) dient,
wobei der Adapter (3) mit seiner Längsachse (47) quer zu den Stegen (4,5) der Plattform (3) einsetzbar und fixierbar ist und eine Aufnahme (8) für ein Telekommunikations- oder Kleingerät und einen zwischen zwei Stegen (4, 5) der Plattform (3) einzusetzenden und mit der Aufnahme (8) über einen in Art eines Auslegers ausgebildeten Verbindungsarm (9) verbundenen Fixierklotz (7) aufweist und wobei der Adapter weiterhin **dadurch gekennzeichnet ist, dass** ein korrespondierend zu der Aufnahme (8), und dem Fixierklotz (7) ausgebildeter Deckel (20) vorgesehen ist, welcher über eine Verrastung mit der Aufnahme (8) und dem Verbindungsarm (9) verbindbar ausgebildet ist.

2. Ladestation nach Anspruch 1,
**dadurch gekennzeichnet,**
**dass** Aufnahme (8), Verbindungsarm (9) und/oder Fixierklotz (7) als separate, miteinander zu verbindende Bauteile ausgebildet sind.

3. Ladestation nach Anspruch 1,
**dadurch gekennzeichnet,**
**dass** der Verbindungsarm (9) und der Fixierklotz (7) über eine Rastverbindung miteinander verbunden sind.

4. Ladestation nach Anspruch 1,
**dadurch gekennzeichnet,**
**dass** der Fixierklotz (7) an seiner Oberseite (12) eine Neigung aufweist.

5. Ladestation nach Anspruch 1,
**dadurch gekennzeichnet,**
**dass** die Aufnahme (8), der Verbindungsarm (9) und/oder der Fixierklotz (7) Ausnehmungen (13 - 15) zur Durchführung eines Kabels aufweisen.

6. Ladestation nach Anspruch 1,
**dadurch gekennzeichnet,**
**dass** die Aufnahme (8) als Befestigung für ein Fitness-Armband ausgebildet ist.

7. Ladestation nach Anspruch 1,
**dadurch gekennzeichnet,**
**dass** der Adapter (2), insbesondere der Deckel (20) an seiner Oberseite (22) Rastmittel (21) zur Verbindung des Adapters (2) mit einem Gelenk aufweist.

8. Ladestation nach Anspruch 1,
**dadurch gekennzeichnet,**
**dass** der Fixierklotz (7) unterhalb der Aufnahme (8) positioniert ist.

9. Ladestation nach Anspruch 8,
**dadurch gekennzeichnet,**
**dass** Länge und/oder Breite der Aufnahme (8) größer dimensioniert sind als der lichte Abstand zwischen zwei Stegen (4, 5) der Plattform (3).

10. Ladestation nach Anspruch 1,
**dadurch gekennzeichnet,**
**dass** der Fixierklotz (7) über mindestens ein Befestigungsmittel mit dem Gehäuseboden (32) der Ladestation (1) verbunden ist.

11. Ladestation nach Anspruch 1,
**dadurch gekennzeichnet,**
**dass** der Abstand zwischen zwei benachbarten Stegen (4, 5) zur Aufnahme zweier hintereinander angeordneter Telekommunikations- oder Kleingeräte (23, 24) bemessen ist.

12. Ladestation nach Anspruch 11,
**dadurch gekennzeichnet,**
**dass** die Stege (4, 5) einen lichten Abstand von 18 mm aufweisen.

13. Ladestation nach Anspruch 1,
**dadurch gekennzeichnet,**
**dass** zwischen der Plattform (3) und dem Gehäuse (27), in das die Plattform (3) einzusetzen ist, eine Magnetverbindung (58 - 61) vorgesehen ist.

14. Ladestation nach Anspruch 13,
**dadurch gekennzeichnet,**
**dass** das Gehäuse (27) an seiner Innenseite (62) einen Kragen (44) zur Auflage der Plattform (3) aufweist und dass zwischen dem Kragen (44) und der Oberkante (63) des Gehäuses (27) mindestens ein Magnet (58, 59) vorgesehen ist.

15. Ladestation nach Anspruch 13,
**dadurch gekennzeichnet,**
**dass** die Plattform (3) an der Außenseite (64) ihrer äußeren Längsstege (4) mindestens jeweils einen Magneten (60, 61) aufweist.

## Claims

1. Charging station (1) for telecommunication devices and other small electronic devices such as clocks, with a platform (3) with a multiple of crosspieces (4 - 6) arranged parallel to each other, under which supply cables and plug-in connectors for connections to the appropriate charger can be laid, whereby at least one adapter (2) serves for the connection of the telecommunication or small devices positioned on the platform (3) with the supply cables or plug-in connectors underneath the platform (3), whereby the adapter (2) can be placed and fixed with its longitudinal axis (47) transverse to the crosspieces (4, 5) of the platform (3) and having a holder (8) for a telecommunication or small device and a fixing block (7) to be inserted between two crosspieces (4, 5) of the platform (3) and connected with the holder (8) by means of a connection arm (9) formed as a boom and whereby the adapter is
**characterised in that** in addition
a cover (20) corresponding to the holder (8), and the fixing block (7) is designed that can be connected to the holder (8) and the connection arm (9) by means of a locking mechanism.

2. Charging station in accordance with claim 1,
**characterised in that**
the holder (8), connecting arm (9) and/or fixing block (7) are formed as separate components to be connected with one another.

3. Charging station in accordance with claim 1,
**characterised in that**
the connecting arm (9) and the fixing block (7) are connected with one another by means of a snap-on connection.

4. Charging station in accordance with claim 1,
**characterised in that**
the fixing block (7) is inclined at the top (12).

5. Charging station in accordance with claim 1,
**characterised in that**
the holder (8), the connecting arm (9) and/or the fixing block (7) have recesses (13-15) for carrying a cable.

6. Charging station in accordance with claim 1,
**characterised in that**
the holder (8) is designed as a fastener for a fitness bracelet.

7. Charging station in accordance with claim 1,
**characterised in that**
the adapter (2), in particular the lid (20) on its top (22), has a locking agent (21) for connecting the adapter (2) with a joint.

8. Charging station in accordance with claim 1,
**characterised in that**
the fixing block (7) is positioned below the holder (8).

9. Charging station in accordance with 8,
**characterised in that**
the length and/or width of holder (8) are greater than the clear distance between two crosspieces (4, 5) of the platform (3).

10. Charging station in accordance with claim 1,
**characterised in that**
the fixing block (7) is connected to the housing bottom (32) of the charging station (1) by means of at least one fastener.

11. Charging station in accordance with claim 1,
**characterised in that**
the space between two adjacent crosspieces (4, 5) is dimensioned to hold two consecutively arranged telecommunication or small devices (23, 24).

12. Charging station in accordance with11,
**characterised in that**
the crosspieces (4, 5) have a spacing of 18 mm.

13. Charging station in accordance with claim 1,
**characterised in that**
a magnetic connection (58 - 61) is provided between the platform (3) and the housing (27), in which the platform (3) is to be inserted.

14. Charging station in accordance with claim 13,
**characterised in that**
the housing (27) has a collar (44) on its inside (62) to support the platform (3) and that at least one magnet (58, 59) is provided between the collar (44) and the top edge (63) of the housing (27).

15. Charging station in accordance with claim 13,
**characterised in that**
the platform (3) has at least one magnet (60, 61) on the outside (64) of each of its outer longitudinal bars (4).

## Revendications

1. Chargeur (1) pour appareils de télécommunication et autres petits appareils électroniques tels que des montres, avec une plateforme (3) présentant plusieurs traverses (4 - 6) disposées parallèlement les unes par rapport aux autres, en dessous de laquelle un câble d'alimentation et des raccords enfichés destinés au raccordement au chargeur correspondant peuvent être posés, dans lequel au moins un adaptateur (2) sert à raccorder les appareils de télécommunication ou les petits appareils positionnés sur la plateforme (3) avec les câbles d'alimentation ou les raccords enfichés en dessous de la plateforme (3), dans lequel l'adaptateur (2) peut être inséré et fixé avec son axe longitudinal (47) perpendiculaire aux traverses (4, 5) de la plateforme (3), et une réception (8) pour un appareil de télécommunication ou un petit appareil et présente un bloc de fixation (7) à insérer entre deux traverses (4, 5) de la plateforme (3) et relié à la réception (8) par un bras de connexion (9) constitué sous la forme d'une flèche, et dans lequel l'adaptateur est en outre
**caractérisé en ce que**
un couvercle (20) formé pour correspondre à la réception (8), et au bloc de fixation (7) est prévu, lequel est formé de manière à pouvoir être relié par le biais d'un encrantage à la réception (8) et au bras de connexion (9).

2. Chargeur selon la revendication 1,
**caractérisé en ce que**
la réception (8), le bras de connexion (9) et/ou le bloc de fixation (7) sont formés de composants séparés devant être reliés entre eux.

3. Chargeur selon la revendication 1,
**caractérisé en ce que**
le bras de connexion (9) et le bloc de fixation (7) sont reliés entre eux par le biais d'une connexion encrantée.

4. Chargeur selon la revendication 1,
**caractérisé en ce que**
le bloc de fixation (7) présente une inclinaison sur sa face supérieure (12).

5. Chargeur selon la revendication 1,
**caractérisé en ce que**
la réception (8), le bras de connexion (9) et/ou le bloc de fixation (7) présentent des réservations (13-15) destinées au passage d'un câble.

6. Chargeur selon la revendication 1,
**caractérisé en ce que**
la réception (8) est conçue en tant que fixation pour une montre-bracelet de fitness.

7. Chargeur selon la revendication 1,
**caractérisé en ce que**
l'adaptateur (2), notamment le couvercle (20), présente sur sa face supérieure (22) des moyens d'encrantage (21) pour raccorder l'adaptateur (2) à une articulation.

8. Chargeur selon la revendication 1,
**caractérisé en ce que**
le bloc de fixation (7) est positionné en dessous de la réception (8).

9. Chargeur selon la revendication 8,
**caractérisé en ce que**
la longueur et/ou la largeur de la réception (8) ont des dimensions plus grandes que la distance intérieure entre deux traverses (4, 5) de la plateforme (3).

10. Chargeur selon la revendication 1,
**caractérisé en ce que**
le bloc de fixation (7) est relié par au moins un moyen de fixation avec le fond du (32) du chargeur (1).

11. Chargeur selon la revendication 1,
**caractérisé en ce que**
la distance entre deux traverses voisines (4, 5) est mesurée de façon à réceptionner deux appareils de télécommunication ou petits appareils (23, 24) disposés l'un derrière l'autre.

12. Chargeur selon la revendication 11,
**caractérisé en ce que**
les traverses (4, 5) présentent une distance intérieure de 18 mm.

13. Chargeur selon la revendication 1,
**caractérisé en ce que**
une connexion magnétique, qui doit être insérée dans la plateforme (3), est prévue (58 - 61) entre la plateforme (3) et le boîtier (27).

14. Chargeur selon la revendication 13,
**caractérisé en ce que**
le boîtier (27) présente sur sa face intérieure (62) une collerette (44) destinés à supporter la plateforme (3) et qu'au moins un aimant (58, 59) est prévu entre la collerette (44) et le bord supérieur (63) du boîtier (27).

15. Chargeur selon la revendication 13,
**caractérisé en ce que**
la plateforme (3) présente sur la face extérieure (64) de sa traverse longitudinale extérieure (4) au moins à chaque fois un aimant (60, 61).
